# EUROPÄISCHE PATENTSCHRIFT

(11) **EP 1 302 360 B1**
(45) Veröffentlichungstag und Bekanntmachung des Hinweises auf die Patenterteilung: **17.01.2007**
(21) Anmeldenummer: 02021955.6
(22) Anmeldetag: 30.09.2002
(51) Int. Cl.: B60N 2/015, A47C 3/12

(54) **Rücksitz eines Fahrzeuges**
Rear seat of a vehicle
Siège arrière d'un véhicule

(30) Priorität: 12.10.2001 DE 10150603
(43) Veröffentlichungstag der Anmeldung: 16.04.2003
(73) Patentinhaber: Bayerische Motoren Werke Aktiengesellschaft, 80809 München (DE)
(72) Erfinder: Leneis, Thomas, 85669 Reithofen (DE)

(56) Entgegenhaltungen:
- EP-A- 0 394 441
- EP-A- 0 503 262
- FR-A- 2 298 509
- GB-A- 792 292
- US-A- 6 065 795

## Beschreibung

Die Erfindung betrifft einen Rücksitz eines Fahrzeuges gemäß dem Oberbegriff des Anspruchs 1.

Es ist bereits bekannt, ein Sitzteil einer Rücksitzbank eines Kraftfahrzeuges über Stahlfedern in ihrer vorgesehenen Lage im Fahrzeug zu montieren, wobei die Stahlfedern am Boden des Fahrzeuges oder an der Sitzstruktur befestigt sind und eine relativ große Bauhöhe aufweisen.

Aus der US 6,065,795 ist ein Rücksitz eines Fahrzeuges mit mindestens einem Lehnenteil und mit einem Sitzteil bekannt, wobei das Sitzteil über Befestigungsmittel an einem Boden des Fahrzeuges lösbar befestigt ist. Das Sitzteil weist eine elastisch verformbare Tragstruktur auf. Die Tragstruktur ist an einer vorgesehenen Position am Boden der Karosserie des Fahrzeuges eingebaut.

Aufgabe der Erfindung ist es, einen Rücksitz eines Fahrzeuges zu schaffen, der einfach zu befestigen ist.

Diese Aufgabe wird durch die Merkmale des Anspruchs 1 gelöst.

Beim erfindungsgemäßen Rücksitz wird bei der Montage eines Sitzteiles des Rücksitzes eine Tragstruktur des Sitzteiles elastisch verformt, damit am Boden des Kraftfahrzeuges angeordnete Befestigungselemente oder Verriegelungselemente in dafür vorgesehene Öffnungen in der Tragstruktur einrasten können. Durch die elastisch verformbare Tragstruktur wirkt das Sitzteil wie eine Feder, so dass keine Stahlfedern mehr verwendet werden müssen.

Die erfindungsgemäßen Befestigungselemente weisen ein freistehendes Ende mit einem hakenförmigen Abschnitt oder einer schrägen Ebene auf, so dass das Eindringen der Befestigungselemente in die Öffnungen der Tragstruktur erleichtert ist.

In einer vorteilhaften Ausführungsform besteht die Tragstruktur aus einem federnden Material und ist beispielsweise als eine Kunststoffschale ausgebildet. Bei einer Ausbildung der Tragstruktur aus Kunststoff ist es vorteilhafterweise möglich, dass das gesamte Sitzteil nur aus Kunststoff herstellbar ist und somit die Wiederverwertung der verwendeten Werkstoffe vereinfacht ist.

Durch die Rückstellkraft der unter Vorspannung eingebauten Tragstruktur wird die Tragstruktur auf die Befestigungselemente oder zumindest in Richtung der Befestigungselemente gedrückt, so dass aufgrund der hakenförmigen Abschnitte der Befestigungselemente ein Abheben der Tragstruktur nach oben in einfacher Weise verhindert wird.

Eine Ausführungsform der Erfindung wird nachstehend anhand der Zeichnungen beispielshalber beschrieben. Dabei zeigen:
- Figur 1: einen Längsschnitt eines Rücksitzes in einem nicht weiter dargestellten Fahrzeug,
- Figur 2: eine vergrößerte Ansicht eines in der Figur 1 gezeigten Befestigungselementes nach der Montage und
- Figur 3: eine vergrößerte Ansicht eines in der Figur 2 gezeigten Befestigungselementes nach einem Fahrzeugaufprall auf ein Hindernis.

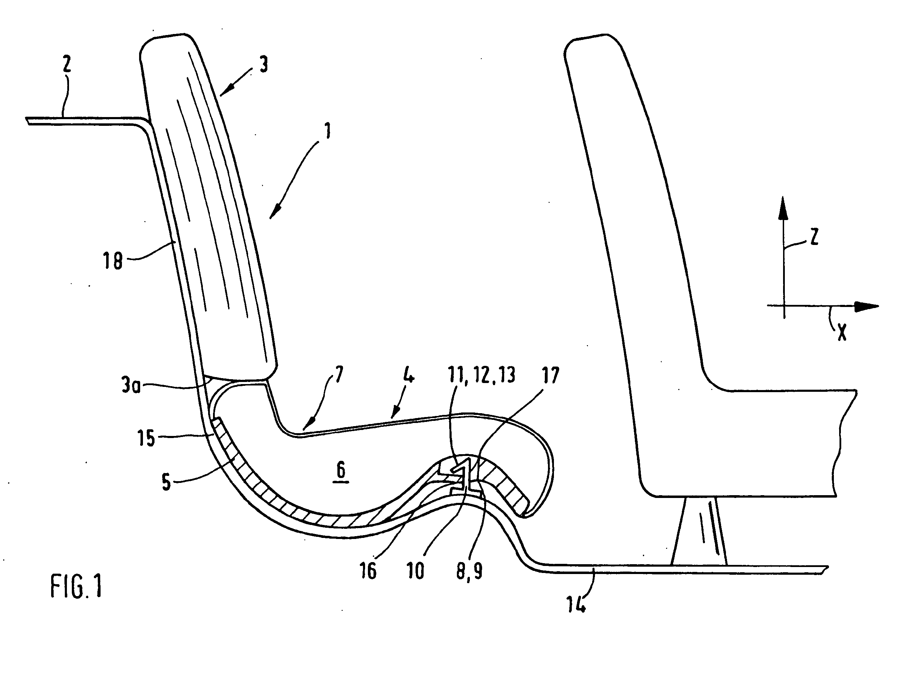

Der in der Figur 1 gezeigte Rücksitz 1 eines nicht weiter dargestellten Fahrzeuges 2 besteht aus einem Lehnenteil 3 und einem Sitzteil 4. In der geschnittenen Darstellung des Sitzteiles 4 ist erkennbar, dass das Sitzteil 4 eine Tragstruktur 5 aufweist, die beispielsweise als eine Kunststoffschale ausgebildet ist. Als Polsterteil 6 dient in der gezeigten Ausführungsform Kunststoffschaum. Das Polsterteil 6 ist von einem Bezug 7, beispielsweise Stoff, Leder oder einem Kunststoffprodukt, umgeben.

An einem vorderen Ende 8 der Tragstruktur 5 ist eine Öffnung 9 ausgebildet, in die im eingebauten Zustand des Sitzteiles 4 ein Befestigungs- oder Verriegelungsbauteil 10 eingreift. Das Befestigungsbauteil 10 weist an seinem oberen Ende 11 einen hakenförmigen Abschnitt 12 auf, dessen schräger Abschnitt 13 nach unten in Richtung eines Bodens 14 des Fahrzeuges 2 und nach hinten in Richtung eines hinteren Endes 15 der Tragstruktur 5 weist.

In der Regel ist vor dem Einbau des Sitzteiles 4 das Lehnenteil 3 bereits an einer Karosserie 18, beispielsweise einer Trennwand, des Fahrzeuges 2 befestigt. Das Sitzteil 4 wird anschließend in die Lücke zwischen einem unteren Ende 3 a des Lehnenteils 3 und dem Boden 14 eingepasst. Beim Einbauvorgang des Sitzteiles 4 verursacht die in horizontaler Richtung x aufgebrachte Montagekraft eine elastische Verformung des Sitzteiles 4, die zunächst ein Einrasten der Befestigungsbauteile 10 in die entsprechenden Öffnungen 9 der Tragstruktur 5 ermöglicht.

Nach der Verrastung der Befestigungsbauteile 10 in den entsprechenden Öffnungen 9 der Tragstruktur 5 erfolgt beim Loslassen des Sitzteiles 4 ein Verschieben der Tragstruktur 5 in horizontaler Richtung x, so dass ein hinterer Rand 16 der Öffnung 9 in Richtung eines stegförmigen Abschnittes 17 des Befestigungsbauteiles 10 verschoben wird. In dieser Stellung befindet sich der hintere Rand 16 der Tragstrukturöffnung 9 unterhalb des hakenförmigen Abschnittes 12 des Befestigungsbauteiles 10. Ein Abheben der Tragstruktur 5 bzw. des Sitzteiles 4 in vertikaler Richtung z wird somit verhindert.

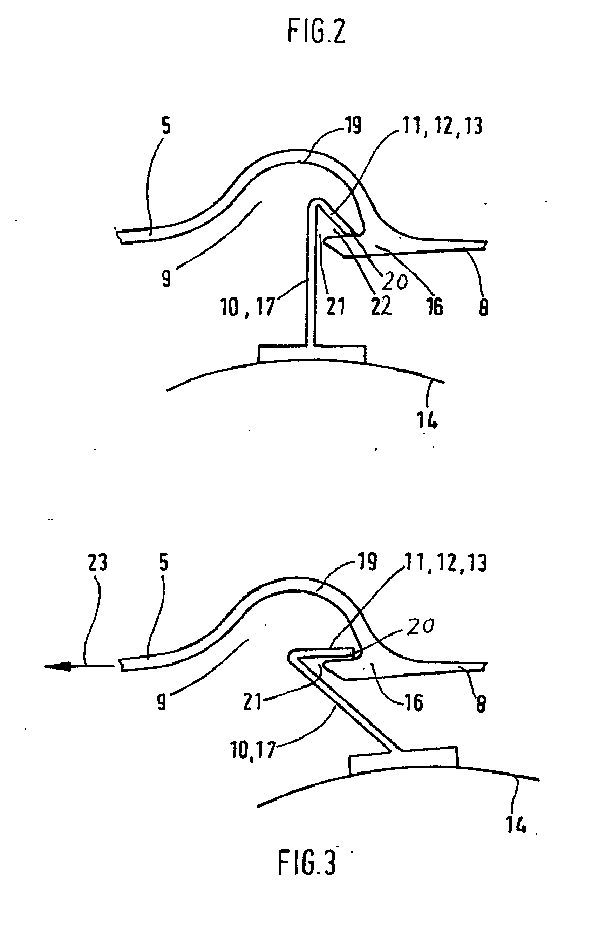

Aus der Figur 2 ist erkennbar, dass die Tragstruktur 5 oberhalb der Öffnung 9 eine Abdeckung 19 aufweist. In der gezeigten Ausführungsform liegt ein freies Ende 20 des hakenförmigen Abschnittes 12 des Befestigungsbauteiles 10 an dem Rand 16 der Tragstruktur 5 an. Sowohl der schräge Abschnitt 13 des hakenförmigen Abschnittes 12 als auch der stegförmige Abschnitt 17 des Befestigungsbauteiles 10 weisen nach der Montage jeweils einen Freiraum 22 und 21 zu dem Rand 16 der Tragstrukturöffnung 9 auf.

In der Figur 3 hat sich die Tragstruktur 5 infolge eines Fahrzeugaufpralls oder dgl. nach links in Richtung eines Pfeils 23 verschoben. Dadurch wird das Befestigungsbauteil 10 ebenfalls nach links in Richtung des Pfeils 23 gedrückt. Der hakenförmige Abschnitt 12 liegt in der gezeigten Ausführungsform dann an dem Rand 16 der Tragstruktur 5 an. Durch die Freiräume 21 und 22 wird verhindert, dass die Tragstruktur 5 mit Biegemomenten belastet wird.

## Patentansprüche

1. Rücksitz (1) eines Fahrzeuges (2) mit mindestens einem Lehnenteil (3) und mit einem Sitzteil (4), wobei das Sitzteil (4) über Befestigungsmittel (10) an einem Boden (14) des Fahrzeuges (2) lösbar befestigt ist, wobei das Sitzteil (4) eine elastisch verformbare Tragstruktur (5) aufweist,
**dadurch gekennzeichnet, dass** auf der elastisch verformbaren Tragstruktur (5) ein Polsterteil (6) angeordnet ist, dass die Tragstruktur (5) ein einstückiges Schalenbauteil aus Kunststoff ist, dass nach der Montage des Sitzteiles (4) die Tragstruktur (5) unter einer elastischen Verformung an einer vorgesehenen Position am Boden (14) der Karosserie (18) des Fahrzeugs (2) eingebaut ist und dass Befestigungselemente und/oder Verriegelungselemente (9, 10) am Sitzteil (4) und am Boden (14) des Fahrzeuges (2) zur Halterung des Sitzteiles (4) vorgesehen sind.

2. Rücksitz nach Anspruch 1,
**dadurch gekennzeichnet, dass** an einem vorderen Ende (8) der Tragstruktur (5) als Verriegelungselemente mindestens zwei zueinander beabstandete Öffnungen (9) vorgesehen sind, dass gegenüberliegend zu der entsprechenden Anzahl von Öffnungen (9) am Boden (14) des Fahrzeuges (2) Befestigungselemente (10) angeordnet sind, die jeweils an einem oberen Ende (11) einen hakenförmigen Abschnitt (12) aufweisen und dass die Befestigungselemente (10) im eingebauten Zustand des Sitzteiles (4) in den jeweiligen Öffnungen (9) eingerastet sind.

3. Rücksitz nach den Ansprüchen 1 oder 2,
**dadurch gekennzeichnet, dass** die Tragstruktur (5) unter einer solchen Vorspannung eingebaut ist, dass ein Rand (16) der Öffnung (9) des Sitzteiles (4) in Richtung eines stegförmigen Abschnittes (17) des Befestigungselements (10) so gedrückt wird, dass der Rand (16) der jeweiligen Öffnung (9) sich unterhalb des hakenförmigen Abschnittes (12) befindet.

4. Rücksitz nach einem der vorhergehenden Ansprüche,
**dadurch gekennzeichnet, dass** die Tragstruktur (5) zwischen einem hinteren Ende (15) und den Öffnungen (9) der Tragstruktur (5) einen in Richtung des Bodens (14) gekrümmten oder konkaven Querschnitt aufweist.

## Claims

1. A back seat (1) of a vehicle (2) comprising at least one back part (3) and a seat part (4), wherein the seat part (4) is releasably fastened by fastening means (10) to a floor (14) of the vehicle (2) and the seat part (4) has an elastically deformable bearing structure (5),
**characterised in that** an upholstery part (6) is disposed on the elastically deformable bearing structure (5), the bearing structure (5) is a one-piece plastics material shell component, after assembly of the seat part (4) the bearing structure is installed by elastic deformation at a set position on the floor (14) of the body (18) of the vehicle (2), and fastening elements and/or locking elements (9, 10) for holding the seat part (4) are provided on the seat part (4) and on the floor (14) of the vehicle (2).

2. A back seat according to claim 1,
**characterised in that** at a front end (8) the bearing structure (5) has locking elements in the form of at least two spaced-apart openings (9), fastening elements (10) are disposed opposite the corresponding number of openings (9) on the floor (14) of the vehicle (2) and each have a hooked portion (12) at a top end (11), and the fastening elements (10) engage in the corresponding openings (9) when the seat part (4) is installed.

3. A back seat according to claim 1 or claim 2,
**characterised in that** the bearing structure (5) is installed under a prestress such that an edge (16) of the opening (9) in the seat part (4) is so pressed towards a web-like portion (17) of the fastening element (10) that the edge (16) of the respective opening (9) is under the hooked portion (12).

4. A back seat according to any of the preceding claims,
**characterised in that** the bearing structure (5), between a rear end (15) and the openings (9) in the bearing structure (5), has a cross-section bent or concave in the direction of the floor (14).

## Revendications

1. Siège arrière (1) d'un véhicule automobile (2) comprenant au moins une partie de dossier (3) et une partie d'assise (4) fixée de manière séparable au plancher (14) du véhicule (2) par des moyens de fixation (10) et présentant une structure porteuse (5) déformable élastiquement,
**caractérisé en ce que**
sur la structure porteuse (5) élastiquement déformable, est monté le coussin (6),
la structure porteuse (5) a la forme d'une coquille monobloc en matière plastique,
la structure porteuse (5), après le montage de la partie d'assise (4), est positionnée par déformation élastique sur le plancher (14) de la carrosserie (18) du véhicule automobile (2), des éléments de fixation et/ou de verrouillage (9, 10) étant prévus sur la partie d'assise (4) et sur le plancher (14) du véhicule (2) pour maintenir la partie d'assise (4).

2. Siège arrière selon la revendication 1,
**caractérisé en ce que**
sur l'extrémité avant (8) de l'extrémité porteuse (5) sont prévues, en tant qu'éléments de verrouillage, au moins deux ouvertures (9) espacées l'une de l'autre, et
en face de ces ouvertures (9), sur le plancher (14) du véhicule (2) est monté un même nombre d'éléments de fixation (10) dont chacun présente à son extrémité supérieure (11) une section (12) en forme de crochet, les éléments de fixation (10), à l'état monté de la partie d'assise (4), étant bloqués dans les ouvertures correspondantes (9).

3. Siège arrière selon la revendication 1 ou 2,
**caractérisé en ce que**
la structure porteuse (5) est montée avec une précontrainte telle qu'un bord (16) de l'ouverture (9) de la partie d'assise (4) est poussé en direction d'une section (17) en forme de barrette de l'élément de fixation (10), le bord (16) de l'ouverture correspondante (9) se trouvant en dessous de la section (12) en forme de crochet.

4. Siège arrière selon la revendication 1, 2 ou 3,
**caractérisé en ce qu'**
entre son extrémité arrière (15) et ses ouvertures (9) la structure porteuse (5) présente une section recourbée ou concave en direction du plancher (4).
